# FASCICULE DE BREVET EUROPEEN

(11) **EP 1 436 880 B1**
(45) Date de publication et mention de la délivrance du brevet: **26.10.2005**
(21) Numéro de dépôt: 02785542.8
(22) Date de dépôt: 11.10.2002
(51) Int. Cl.: H02K 7/102, E05F 11/50, E05F 15/16, H02K 7/116

(54) **MOTOREDUCTEUR, LEVE-VITRE ET PROCEDE DE FONCTIONNEMENT DE LEVE-VITRE**
GETRIEBEMOTOR, FENSTERHEBER UND VERFAHREN ZUM BEDIENEN DES FENSTERHEBERS
GEAR MOTOR, POWER- WINDOW REGULATOR AND METHOD FOR OPERATING A WINDOW REGULATOR

(30) Priorité: 12.10.2001 FR 0113198
(43) Date de publication de la demande: 14.07.2004
(73) Titulaire: ArvinMeritor Light Vehicle Systems-France, 45600 Sully sur Loire (FR)
(72) Inventeur: NOMERANGE, Hervé, F-14000 Caen (FR)
(74) Mandataire: Hirsch & Associés
(86) Numéro de dépôt international: PCT/FR2002/003483
(87) Numéro de publication internationale: WO 2003/032471

(56) Documents cités:
- GB-A- 1 592 748

## Description

L'invention concerne les motoréducteurs de lève-vitres de véhicules et plus particulièrement les lève-vitres à dispositif de freinage et d'irréversibilité de la vitre.

Les lève-vitre connus présentent des moyens d'entraînement en montée et en descente d'une vitre. Des personnes tentent d'ouvrir une vitre d'un véhicule en exerçant un effort de descente sur cette vitre fermée ou entrouverte, afin d'accéder frauduleusement à l'habitacle du véhicule.

Un lève-vitre, vendu par la demanderesse sous la référence 101087 comprend un moteur électrique avec réducteur ; un arbre de sortie du moteur présente à une extrémité des dentures formant une vis. Cette vis engrène sur une roue pour former un réducteur à roue et vis sans fin. La roue transmet le mouvement à un tambour d'entraînement de câble. Le câble entraîne en montée et en descente un curseur solidaire de la vitre. Dans ce lève-vitre, on utilise un réducteur à roue et vis sans fin présentant un rendement de transmission de l'ordre de 40 pour cent. Lorsqu'un effort est appliqué sur la vitre, le moteur et la transmission à faible rendement bloquent la rotation de la roue. On assure ainsi un entraînement en montée et descente irréversible de la vitre par le tambour.

Ce dispositif a des inconvénients. Du fait du rendement de transmission réduit, l'entraînement du tambour nécessite l'utilisation d'un moteur surdimensionné par rapport à l'effort d'entraînement réellement appliqué au tambour. Le moteur est ainsi volumineux et coûteux.

Le document DE-A-3110368 décrit un lève-vitre comprenant un organe moteur accouplé à un tambour. Le tambour entraîne une vitre en montée et en descente par l'intermédiaire d'un câble solidaire d'un curseur de vitre. Le tambour est muni d'un dispositif de verrouillage mécanique. Un engrenage placé sur l'axe de l'arbre moteur est muni d'ergots saillant axialement. Ces ergots se bloquent contre une plaque fixe ménagée dans la structure du lève-vitre. Le lève-vitre est libéré lorsque l'arbre moteur mène le tambour et bloqué lorsque le tambour mène l'arbre moteur.

Ce dispositif est complexe et coûteux. De plus, le tambour est volumineux. Ce dispositif nécessite en outre l'utilisation d'un système de freinage supplémentaire pour assurer l'arrêt de la remontée de la vitre lors de la détection d'un coincement.

Le dispositif par la demanderesse sous la référence 101087 comprend également un système anti-coincement. Le système mesure l'intensité consommée et la vitesse de rotation du moteur. Le système détermine le coincement d'un objet entre le sommet de la vitre et le cadre de la vitre à partir de variations de ces paramètres. L'alimentation du moteur est alors interrompue et l'entraînement de la vitre est ainsi stoppé.

Ce dispositif anti-coincement présente des inconvénients. Les temps de réponse entre le coincement d'un objet et l'arrêt effectif du mouvement de la vitre est important. La vitre continuant à être entraînée durant ce temps de réponse, un utilisateur peut alors être blessé. Des véhicules utilisant ce type de lève-vitre sont également plus difficile à homologuer.

Le document GB-A-1592748, qui décrit les caractéristiques des préambules des revendications 1 et 10, montre un dispositif anti-coincement utilisant un élément piézoélectrique.

Il existe donc un besoin pour un lève-vitre et un motoréducteur apportant une solution à un ou plusieurs de ces convénients. L'invention a ainsi pour objet un lève-vitre selon la revendication 1 comprenant un moteur électrique présentant un arbre de moteur, un curseur de vitre, une transmission présentant une entrée entraînée par l'arbre de moteur, et une sortie entraînant le curseur, et un élément piézoélectrique bloquant sélectivement la position du curseur, par l'intermédiaire d'un palier fendu.

Selon une variante, l'élément piézoélectrique sollicite l'arbre de moteur.

Selon une autre variante, l'élément piézoélectrique présente une surface de friction susceptible de bloquer la position du curseur.

Selon encore une variante, la surface de friction présente un coefficient de frottement sur l'arbre supérieur à 0.15.

Selon encore une autre variante, la transmission présente un réducteur avec un rapport de réduction de vitesse entre l'entrée et la sortie du motoréducteur inférieur à 1.

On peut encore prévoir que le réducteur comprend un système de roue à vis sans fin, la vis étant réalisée sur l'arbre de moteur.

Selon une variante, l'élément piézoélectrique forme une portée de l'arbre de moteur.

Selon encore une variante, le moteur comprend un carter présentant une portée, l'élément piézoélectrique présente une face extérieure logée à demeure dans la portée et une face intérieure sollicitant le palier.

Selon encore une autre variante, le piézoélément est piézostrictif.

On peut également prévoir que l'élément piézoélectrique freine sélectivement le mouvement du curseur.

L'invention a également pour objet un motoréducteur selon la revendication 10 comprenant un arbre de moteur, un réducteur accouplé à l'arbre de moteur et présentant un rapport de réduction de vitesse entre l'entrée et la sortie supérieur à 1, un élément piézoélectrique bloquant sélectivement l'arbre de moteur par l'intermédiaire d'un palier fendu.

Selon une variante, l'élément piézoélectrique présente une surface de friction susceptible de bloquer l'arbre, cette surface présentant de préférence un coefficient de friction avec l'arbre supérieur à 0.15.

Selon encore une variante, le réducteur présente un système à roue et vis sans fin, la vis étant réalisée sur l'arbre de moteur.

Selon une autre variante, l'élément piézoélectrique forme une portée de l'arbre de moteur.

On peut encore prévoir que le motoréducteur comprenne un carter présentant une portée, l'élément piézoélectrique présente une face extérieure logée à demeure dans la portée et une face intérieure sollicitant le palier.

Selon une variante, le piézoélément est piézostrictif.

Selon encore une variante, l'élément piézoélectrique freine sélectivement l'arbre de moteur.

L'invention a encore pour objet un procédé de fonctionnement d'un lève-vitre comprenant les étapes de blocage de la position du curseur par l'intermédiaire de l'élément piézoélectrique lorsque le moteur est à l'arrêt, de déblocage de la position du curseur lorsque le moteur est alimenté.

Selon une variante, l'élément piézoélectrique présente deux bornes, est piézostrictif et n'est pas alimenté durant l'étape de blocage du curseur.

Selon encore une variante, le procédé comprend les étapes d'entraînement du curseur par le moteur, de détection d'un coincement, de freinage du mouvement du curseur par l'intermédiaire de l'élément piézoélectrique.

Selon une autre variante, le procédé comprend en outre une étape de court-circuitage de l'alimentation du moteur après la détection d'un coincement.

D'autres caractéristiques et avantages de l'invention apparaîtront à la lecture de la description qui suit de modes de réalisation de l'invention, donnée à titre d'exemple et en référence aux dessins annexés qui montrent:
- figure 1, une représentation schématique d'un lève-vitre comprenant un motoréducteur selon un mode préféré de l'invention ;
- figure 2, une vue en coupe longitudinale d'un motoréducteur selon un mode préféré de l'invention ;
- figure 3, une vue en en coupe transversale de détails de la figure 2.

L'invention propose notamment un lève-vitre et un motoréducteur d'entraînement d'un curseur de vitre. Un élément piézoélectrique bloquant le curseur bloque la position du curseur lorsque le moteur est arrêté. Ainsi, lors d'une tentative d'ouverture de la vitre en forçant depuis l'extérieur, la vitre est maintenue bloquée dans sa position.

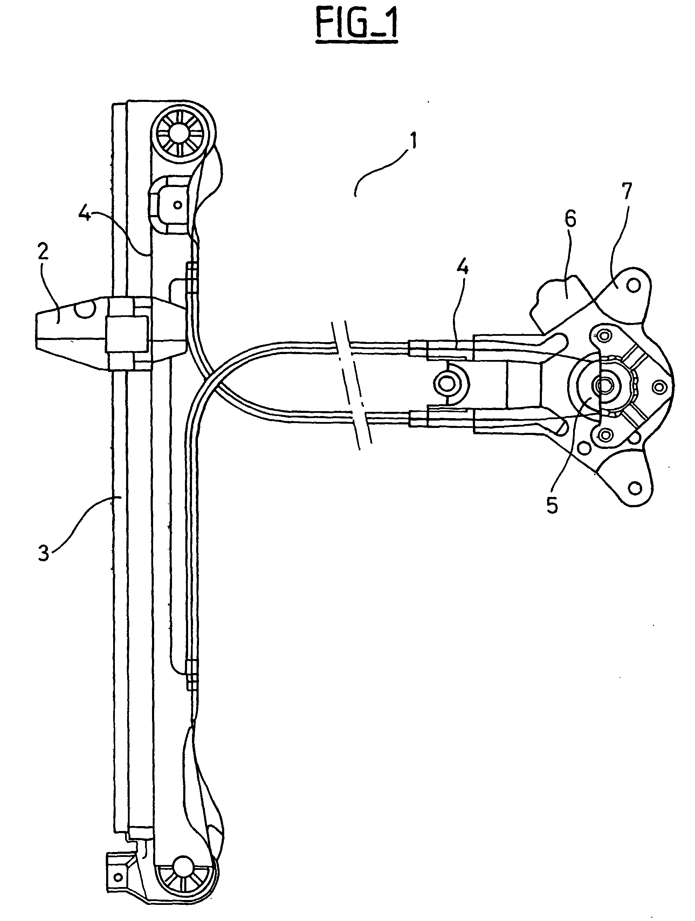

La figure 1 représente une vue schématique d'un lève-vitre 1 selon un mode de réalisation de l'invention. Le lève-vitre 1 comprend un curseur 2 solidaire d'une vitre non représentée. Le curseur 2 peut par exemple coulisser sur un rail de guidage 3. Un câble 4 entraîne le curseur 2. Ce câble 4 est lui même entraîné par un tambour 5. Ce tambour 5 est accouplé à la roue d'un motoréducteur 6, par exemple par l'intermédiaire d'un amortisseur. Le motoréducteur est par exemple fixé sur une pièce structurelle 7 du lève-vitre 1.

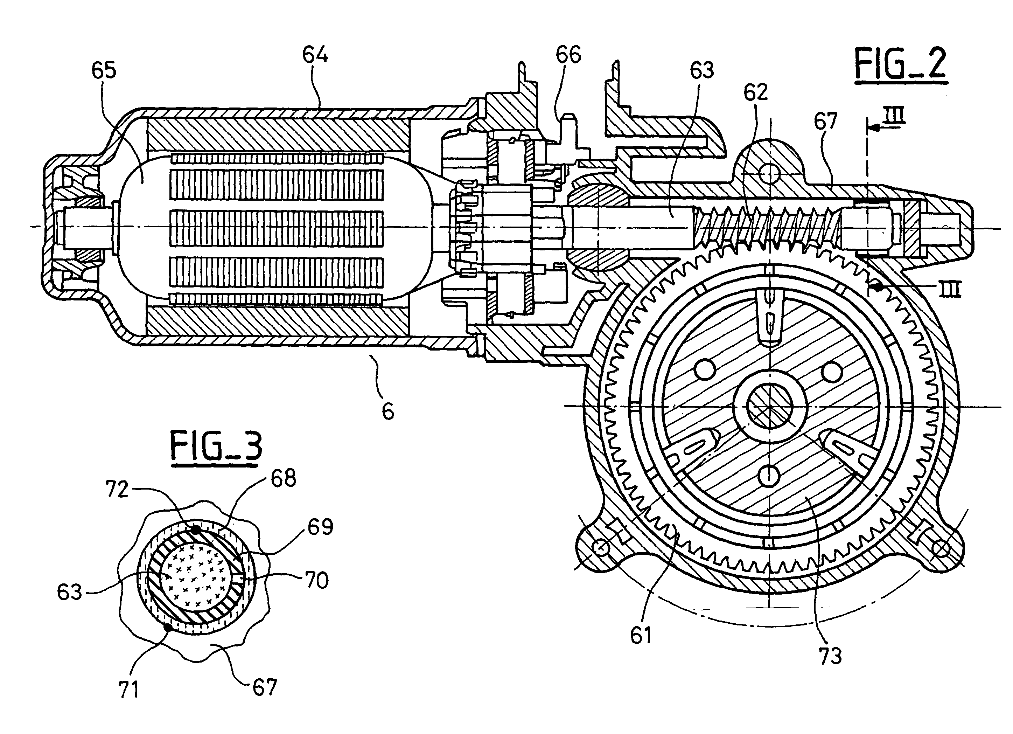

Comme cela est représenté de façon plus détaillée à la figure 2, le motoréducteur 6 est logé dans un carter 67. Un moteur 64 présente un rotor 65 et un dispositif 66 d'alimentation et de commande qui peuvent être réalisés de façon connue en soi. La roue 61 est l'élément de sortie d'un réducteur à roue et vis sans fin. La roue 61 est menée par un engrenage à vis 62 réalisé sur l'arbre de sortie 63 du moteur 64. Le réducteur assure la transmission de puissance mécanique entre l'arbre de moteur 63 et le tambour 5. Le réducteur présente également un rapport de réduction de vitesse entre l'entrée et la sortie du motoréducteur supérieur à 1. La vitesse d'entrée du réducteur est ainsi supérieure à la vitesse de sortie du réducteur. Bien qu'on ait utilisé dans l'exemple un réducteur à roue et vis sans fin, il est possible d'utiliser tout type de réducteur adéquat. Un amortisseur 73 accouple le tambour 5 et la roue 61. L'amortisseur permet en particulier d'amortir les chocs durant les phases transitoires d'entraînement du moteur. Le tambour 5 sert d'élément d'enroulement pour le câble 4 qui entraîne le curseur.

Dans ce mode de réalisation, le motoréducteur comprend un élément piézoélectrique qui bloque sélectivement la position du curseur. L'utilisation d'un élément piézoélectrique pour le blocage du curseur permet d'utiliser une pièce de blocage de forme simple et de dimensions réduites. Un piézoélément adéquat est en outre de fabrication aisée. Le blocage du curseur peut en outre être commandé sélectivement avec des moyens simples avec un élément piézoélectrique. L'élément piézoélectrique peut réaliser le blocage de la position du curseur par freinage. Un freinage bloquant la position du curseur jusqu'à un effort de 500N exercé sur la vitre est considéré comme un blocage. Le blocage sélectif de la position du curseur est réalisé de sorte à assurer l'irréversibilité du lève-vitre. Ainsi, l'entraînement du curseur par la vitre est empêché, tandis que l'entraînement du curseur par le moteur est autorisé. Des moyens permettant d'assurer le blocage sélectif du curseur seront détaillés par la suite. De façon générale, on assure le blocage de la position du curseur lorsque le moteur est arrêté et on supprime le blocage du curseur lorsque le moteur est alimenté. L'irréversibilité étant réalisée sélectivement, il est possible d'utiliser un réducteur présentant un rendement de transmission élevé. On peut alors utiliser un moteur de puissance réduite, par exemple un moteur de 20Watts.

Le blocage de la position du curseur est réalisé comme le montre la figure 2 par blocage de l'arbre de moteur par l'élément piézoélectrique. Comme cela est représenté plus en détail à la figure 3, l'élément piézoélectrique peut être utilisé comme portée du moteur. On conserve ainsi un motoréducteur de volume réduit. Le volume du tambour n'est en outre pas augmenté. On peut utiliser un élément piézoélectrique de forme sensiblement cylindrique. L'élément piézoélectrique peut être placé dans un logement du carter 67 ou être monté avec un ajustement serré dans un alésage du carter 67. De façon générale, on peut loger à demeure une face extérieure de l'élément piézoélectrique dans un alésage du carter. Il est avantageux de disposer l'élément piézoélectrique dans le carter 67 du motoréducteur 6. On peut ainsi placer les connexions électriques de l'élément piézoélectrique au même niveau que les connexions électriques d'alimentation du moteur. On peut ainsi simplifier le câblage électrique du lève-vitre 1.

L'élément piézoélectrique 68 bloque l'arbre de moteur 63 par l'intermédiaire d'un élément de guidage en rotation de l'arbre. On utilise pour cela un palier fendu 69, comme cela est représenté sur les figures 2 et 3. Le palier fendu 69 est logé contre une face intérieure de l'élément piézoélectrique 68. Le palier présente une fente 70 sensiblement longitudinale. Le diamètre du palier 69 peut ainsi varier. En sollicitant radialement le palier 69, on peut diminuer la largeur de la fente 70 ainsi que le diamètre du palier. On augmente ainsi l'effort de freinage exercé par le palier 69 sur l'arbre 63. Lorsque l'élément piézoélectrique 68 est en position dilatée, c'est-à-dire lorsque son diamètre intérieur présente une dimension minimale, la face intérieure de l'élément piézoélectrique 68 sollicite le palier fendu 69 et réduit la largeur de la fente 70. La rotation de l'arbre de moteur 63 est alors bloquée par le palier 69.

On peut utiliser un élément piézoélectrique 68 réalisé en quartz ou titanate de barium. On utilise de préférence un matériau piézostrictif pour réaliser l'élément piézoélectrique. Ainsi, l'élément piézoélectrique est en position dilatée ou position de blocage au repos. Lors d'un défaut d'alimentation de l'élément piézoélectrique, dû par exemple à une batterie déchargée, l'élément piézoélectrique 68 continue d'assurer le blocage de la position du curseur. On peut utiliser un élément piézoélectrique de 10mm X 8 mm X 5 mm avec un réducteur de rapport de réduction de vitesse 73 pour assurer un effort de blocage de 500N sur le curseur. Une tension de déblocage de 12 à 60 V entre les électrodes permet de libérer l'arbre de moteur.

On dispose de préférence une électrode sur la périphérie extérieure de l'élément piézoélectrique et une autre électrode sur la périphérie intérieure de l'élément piézoélectrique. On assure ainsi une plus grande amplitude de variation du diamètre intérieur de l'élément piézoélectrique.

On peut utiliser un palier fendu 69 en bronze fritté et lubrifié. Un palier de dimensions diamètre 8 intérieur, une épaisseur mini de 5 mm et un diamètre extérieur mini de 10 mm convient pour assurer le blocage de l'arbre de moteur 63.

La disposition de l'élément piézoélectrique 68 en amont du réducteur, et sur l'arbre de moteur en particulier, est avantageuse. En effet, on peut utiliser un élément piézoélectrique présentant une puissance de freinage réduite car le réducteur multiplie le couple de freinage exercé par l'élément piézoélectrique sur le curseur.

On peut également utiliser l'élément piézoélectrique 68 pour réaliser sélectivement le freinage du mouvement du curseur 2. La disposition de l'élément piézo-électrique sur l'arbre de moteur est également avantageuse pour réaliser ce freinage. Il est possible de freiner le mouvement du curseur lorsqu'un coincement de la vitre est détecté. Le freinage à l'aide de l'élément piézoélectrique permet de réduire plus rapidement l'inertie du moteur. On peut ainsi réduire le temps de réponse entre la détermination d'un coincement et l'arrêt du curseur et de la vitre, on utilise en outre pour cela un élément piézoélectrique déjà existant pour assurer l'irréversibilité du mouvement du curseur.

On peut utiliser une commande de l'élément piézoélectrique commune avec la commande de l'alimentation du moteur. On peut prévoir que la commande applique différentes tensions aux bornes de l'élément piézoélectrique en fonction de l'opération à réaliser. On peut utiliser différentes tensions de freinage ou de déblocage en fonction de conditions extérieures détectées, telles que la température, l'état d'alimentation du moteur ou le coincement d'un objet.

L'invention concerne également des procédés de fonctionnement du lève-vitre et du motoréducteur décrits.

Selon un premier procédé de fonctionnement, on bloque la position du curseur par l'intermédiaire de l'élément piézoélectrique lorsque le moteur est à l'arrêt. On peut par exemple maintenir l'élément piézoélectrique au repos durant cette étape, par exemple lorsqu'on utilise un élément piézoélectrique piézostrictif. La position du curseur est débloquée, par exemple en excitant un élément piézoélectrique piézostrictif, lorsque le moteur est alimenté.

Selon un deuxième procédé de fonctionnement d'un lève-vitre, on effectue les étapes d'entraînement du curseur par le moteur. On détecte un coincement de la vitre par des moyens appropriés. On envoie alors par exemple une commande de freinage à l'élément piézoélectrique lorsqu'un coincement est détecté. On freine ensuite le mouvement du curseur par l'intermédiaire de l'élément piézoélectrique.

Selon une variante, on court-circuite l'alimentation du moteur après la détection d'un coincement. On assure ainsi un freinage supplémentaire en bénéficiant d'un frein moteur.

## Revendications

1. Lève-vitre (1) comprenant :
- un moteur électrique présentant un arbre de moteur (63);
- un curseur (2) de vitre ;
- une transmission (5, 61, 62, 73) présentant une entrée (62) entraînée par l'arbre de moteur (63), et une sortie (5) entraînant le curseur(2) ;
- un élément piézoélectrique (68) sur l'arbre de moteur (63); **caractérisé en ce que** l'élément piézoélectrique (68) bloque sélectivement la position du curseur (2) en bloquant l'arbre moteur (63) par l'intermédiaire d'un palier fendu (69).

2. Le lève-vitre de la revendication 1, **caractérisé en ce que** l'élément piézoélectrique (68) présente une surface de friction susceptible de bloquer la position du curseur (2).

3. Le lève-vitre de la revendication 2, **caractérisé en ce que** la surface de friction présente un coefficient de frottement sur l'arbre supérieur à 0.15.

4. Le lève-vitre de la revendication 2 ou 3, **caractérisé en ce que** la transmission présente un réducteur avec un rapport de réduction de vitesse entre l'entrée et la sortie du motoréducteur supérieur à 1.

5. Le lève-vitre de la revendication 4, **caractérisé en ce que** le réducteur comprend un système de roue à vis sans fin (62, 61), la vis (62) étant réalisée sur l'arbre de moteur (63).

6. Le lève-vitre de l'une des revendications précédentes, **caractérisé en ce que** l'élément piézoélectrique (68) forme une portée de l'arbre de moteur (63).

7. Le lève-vitre de l'une des revendications précédentes, **caractérisé en ce que** :
- le moteur comprend un carter présentant une portée ;
- l'élément piézoélectrique (68) présente une face extérieure logée à demeure dans la portée et une face intérieure sollicitant le palier.

8. Le lève-vitre de l'une des revendications précédentes, **caractérisé en ce que** le piézoélément (68) est piézostrictif.

9. Le lève-vitre de l'une des revendications précédentes, **caractérisé en ce que** l'élément piézoélectrique (68) freine sélectivement le mouvement du curseur (2).

10. Motoréducteur comprenant :
- un arbre de moteur (63);
- un réducteur accouplé à l'arbre de moteur (63) et présentant un rapport de transmission inférieur à 1 ;
- un élément piézoélectrique (68) sur l'arbre de moteur (63); **caractérisé en ce que** l'élément piézoélectrique (68) bloque sélectivement l'arbre de moteur (63) par l'intermédiaire d'un palier fendu (69).

11. Le motoréducteur de la revendication 10, **caractérisé en ce que** l'élément piézoélectrique (68) présente une surface de friction susceptible de bloquer l'arbre (63), cette surface présentant de préférence un coefficient de friction avec l'arbre (63) supérieur à 0.15.

12. Le motoréducteur de l'une des revendications 10 ou 11, **caractérisé en ce que** le réducteur présente un système à roue et vis sans fin (61, 62), la vis (62) étant réalisée sur l'arbre de moteur (63).

13. Le motoréducteur de l'une des revendications 10 à 12, **caractérisé en ce que** l'élément piézoélectrique (68) forme une portée de l'arbre de moteur.

14. Le motoréducteur de l'une des revendications précédentes, **caractérisé en ce que** :
- il comprend un carter présentant une portée ;
- l'élément piézoélectrique (68) présente une face extérieure logée à demeure dans la portée et une face intérieure sollicitant le palier.

15. Le motoréducteur de l'une des revendications 10 à 14, **caractérisé en ce que** le piézoélément (68) est piézostrictif.

16. Le motoréducteur de l'une des revendications 10 à 15, **caractérisé en ce** l'élément piézoélectrique (68) freine sélectivement l'arbre de moteur (63).

17. Procédé de fonctionnement d'un lève-vitre selon l'une des revendications 1 à 9,
**caractérisé en ce qu'**il comprend les étapes de :
- blocage de la position du curseur (2) par l'intermédiaire de l'élément piézoélectrique (68) lorsque le moteur est à l'arrêt ;
- déblocage de la position du curseur (2) lorsque le moteur est alimenté.

18. Le procédé de la revendication 17, **caractérisé en ce que** l'élément piézoélectrique (68) présente deux bornes, est piézostrictif et n'est pas alimenté durant l'étape de blocage du curseur.

19. Procédé de fonctionnement d'un lève-vitre selon l'une des revendications 1 à 9, **caractérisé en ce qu'**il comprend les étapes de :
- entraînement du curseur (2) par le moteur ;
- détection d'un coincement ;
- freinage du mouvement du curseur par l'intermédiaire de l'élément prézoélectrique (68).

20. Le procédé de la revendication 19, **caractérisé en ce qu'**il comprend en outre une étape de court-circuitage de l'alimentation du moteur après la détection d'un coincement.

## Claims

1. A window regulator (1) comprising:
- an electric motor having a drive shaft (63);
- a window slider (2);
- a transmission (5, 61, 62, 73) having an input (62) driven by the drive shaft (63), and an output (5) driving the slider (2);
- a piezoelectric element (68) on the motor shaft (63); **characterized in that** the piezoelectric element (68) selectively locks the position of the slider (2) by locking the drive shaft (63) by means of a split bearing (69).

2. The window regulator according to claim 1, **characterized in that** the piezoelectric element (68) has a friction surface which is able to lock the position of the slider (2).

3. The window regulator according to claim 2, **characterized in that** the friction surface has a coefficient of friction on the shaft greater than 0.15.

4. The window regulator according to claim 2 or 3, **characterized in that** the transmission has a reduction gear with a speed reduction ratio between the input and the output of the geared motor greater than 1.

5. The window regulator according to claim 4, **characterized in that** the reduction gear comprises a worm wheel system (62, 61), the worm (62) being provided on the drive shaft (63).

6. The window regulator according to any one of the preceding claims, **characterized in that** the piezoelectric element (68) forms a journal of the drive shaft (63).

7. The window regulator according to any one of the preceding claims, **characterized in that**:
- the motor comprises a housing with a journal;
- the piezoelectric element (68) has an outer surface permanently housed in the journal and an inner surface acting upon the bearing.

8. The window regulator according to any one of the preceding claims, **characterized in that** the piezoelement (68) is piezostrictive.

9. The window regulator according to any one of the preceding claims, **characterized in that** the piezoelectric element (68) selectively brakes the movement of the slider (2).

10. Geared motor comprising:
- a drive shaft (63);
- a reduction gear coupled to the drive shaft (63) and having a transmission ratio lower than 1;
- a piezoelectric element (68) on the motor shaft (63); **characterized in that** the piezoelectric element (68) selectively locks the drive shaft (63) by means of a split bearing (69).

11. The geared motor according to claim 10, **characterized in that** the piezoelectric element (68) has a friction surface which is able to lock the shaft (63), this surface preferably having a coefficient of friction with the shaft (63) greater than 0.15.

12. The geared motor according to any one of claims 10 or 11, **characterized in that** the reduction gear has a worm wheel system (61, 62), the worm (62) being provided on the drive shaft (63).

13. The geared motor according to any one of claims 10 to 12, **characterized in that** the piezoelectric element (68) forms a journal of the drive shaft.

14. The geared motor according to any one of the preceding claims, **characterized in that**:
- it comprises a housing with a journal;
- the piezoelectric element (68) has an outer surface permanently housed in the journal and an inner surface acting on the bearing.

15. The geared motor according to any one of claims 10 to 14, **characterized in that** the piezoelement is piezostrictive.

16. The geared motor according to any one of claims 10 to 15, **characterized in that** the piezoelectric element (68) selectively brakes the drive shaft (63).

17. Method for operating a window regulator according to one of claims 1 to 9, **characterized in that** it comprises the steps of:
- locking the position of the slider (2) by means of the piezoelectric element (68) when the motor is switched off;
- unlocking the position of the slider (2) when the motor is supplied with power.

18. The method according to claim 17, **characterized in that** the piezoelectric element (68) has two terminals, is piezostrictive and is not supplied with power during the slider locking step.

19. Method for operating a window regulator according to one of claims 1 to 9, **characterized in that** it comprises the steps of:
- driving the slider (2) by the motor;
- detection of an obstruction;
- braking of the movement of the slider by means of the piezoelectric element (68).

20. The method according to claim 19, **characterized in that** it also comprises a step of short-circuiting the power supply to the motor after the detection of an obstruction.

## Patentansprüche

1. Fensterheber (1) mit
- einem Elektromotor, der einer Motorwelle (63) ;
- einem Schieber (2) für die Scheibe;
- einem Getriebe (5, 61, 62, 73), das einen vom der Motorwelle (63) angetriebenen Eingang und einem den Schieber (2) antreibenden Ausgang (5) ;
- einem piezoelektrischen Element (68) auf der Motorwelle (63),
**dadurch gekennzeichnet, dass** das piezoelektrische Element (68) die Stellung des Schiebers (2) selektiv blockiert, indem die Motorwelle (63) über ein geschlitztes Lager (69) blockiert wird.

2. Fensterheber nach Anspruch 1, **dadurch gekennzeichnet, dass** das piezoelektrische Element (68) eine Reibfläche aufweist, die die Stellung des Schiebers (2) blockieren kann.

3. Fensterheber nach Anspruch 2, **dadurch gekennzeichnet, dass** die Reibfläche einen Reibwert auf der Welle aufweist, der größer als 0,15 ist.

4. Fensterheber nach Anspruch 2 oder 3, **dadurch gekennzeichnet, dass** das Getriebe ein Untersetzungsgetriebe mit einem Geschwindigkeitsuntersetzungsverhältnis von mehr als 1 zwischen dem Eingang und dem Ausgang des Getriebemotors aufweist.

5. Fensterheber nach Anspruch 4, **dadurch gekennzeichnet, dass** das Untersetzungsgetriebe eine Schneckenrad-Einrichtung (62, 61) umfaßt, wobei die Schnecke (62) auf der Motorwelle (63) ausgeführt ist.

6. Fensterheber nach einem der vorhergehenden Ansprüchen, **dadurch gekennzeichnet, dass** das piezoelektrische Element (68) eine Auflagefläche der Motorwelle (63) bildet.

7. Fensterheber nach einem der vorhergehenden Ansprüchen, **dadurch gekennzeichnet, dass**:
- der Motor ein Gehäuse mit einer Auflagefläche umfaßt;
- das piezoelektrische Element (68) eine feststehend in der Auflagefläche angebrachte Außenseite und eine das Lager beaufschlagende Innenseite aufweist.

8. Fensterheber nach einem der vorhergehenden Ansprüchen, **dadurch gekennzeichnet, dass** das piezoelektrische Element (68) piezostriktiv ist.

9. Fensterheber nach einem der vorhergehenden Ansprüchen, **dadurch gekennzeichnet, dass** das piezoelektrische Element (68) die Bewegung des Schiebers (2) selektiv bremst.

10. Getriebemotor mit:
- einer Motorwelle (63);
- einem mit der Motorwelle (63) verbundenen Untersetzungsgetriebe, das ein Übertragungsverhältnis von weniger als 1 aufweist;
- einem piezoelektrischen Element (68) auf der Motorwelle (63),
**dadurch gekennzeichnet, dass** das piezoelektrische Element (68) die Motorwelle (63) über ein geschlitztes Lager (69) selektiv blockiert.

11. Getriebemotor nach Anspruch 10, **dadurch gekennzeichnet, dass** das piezoelektrische Element (68) eine Reibfläche aufweist, die Welle (63) blockieren kann, wobei diese Fläche vorzugsweise einen Reibwert auf der Welle (63) aufweist, der größer ist als 0,15.

12. Getriebemotor nach einem der Ansprüche 10 oder 11, **dadurch gekennzeichnet, dass** das Getriebe eine Schneckenrad-Einrichtung (61, 62) aufweist, wobei die Schnecke (62) auf der Motorwelle (63) ausgeführt ist.

13. Getriebemotor nach einem der Ansprüche 10 bis 12, **dadurch gekennzeichnet, dass** das piezoelektrische Element (68) eine Auflagefläche der Motorwelle bildet.

14. Getriebemotor nach einem der vorhergehenden Ansprüche, **dadurch gekennzeichnet, dass**
- er ein Gehäuse mit einer Auflagefläche umfaßt;
- das piezoelektrische Element (68) eine feststehend in der Auflagefläche angebrachte Außenseite und eine das Lager beaufschlagende Innenseite aufweist.

15. Getriebemotor nach einem der vorhergehenden Ansprüchen, **dadurch gekennzeichnet, dass** das piezoelektrische Element (68) piezostriktiv ist.

16. Getriebemotor nach einem der vorhergehenden Ansprüchen, **dadurch gekennzeichnet, dass** das piezoelektrische Element (68) die Bewegung der Motorwelle (63) selektiv bremst.

17. Verfahren zum Betreiben eines Fensterhebers nach einem der Ansprüche 1 bis 9, **dadurch gekennzeichnet, dass** es folgende Schritte umfaßt:
- Blockieren der Stellung des Schiebers (2) über das piezoelektrische Element (68), wenn der Motor stillsteht;
- Blockieren der Stellung des Schiebers (2), wenn der Motor versorgt ist.

18. Verfahren nach Anspruch 17, **dadurch gekennzeichnet, dass** das piezoelektrische Element (68) zwei Klemmen aufweist, piezostriktiv ist und während des Schrittes des Blockierens des Schiebers nicht gespeist wird.

19. Verfahren zum Betreiben eines Fensterhebers nach einem der Ansprüche 1 bis 9, **dadurch gekennzeichnet, dass** es folgende Schritte umfaßt:
- Antreiben des Schiebers (2) durch den Motor;
- Erfassen einer Klemmung;
- Bremsen einer Bewegung des Schiebers über das piezoelektrische Element nach Erfassung einer Klemmung.

20. Verfahren nach Anspruch 19, **dadurch gekennzeichnet, dass** es zudem einen Schritt des Kurzschließens der Versorgung des Motors nach Erfassen einer Klemmung umfaßt.
